# Europäisches Patentamt

## European Patent Office

## Office européen des brevets

(11) Veröffentlichungsnummer : **0 007 045**
**B1**

(12) # EUROPÄISCHE PATENTSCHRIFT

(45) Veröffentlichungstag der Patentschrift :
21.10.81

(51) Int. Cl.³ : **B 01 D 29/14, E 02 B 11/00**

(21) Anmeldenummer : 79102184.3

(22) Anmeldetag : 29.06.79

(54) **Filterrohr.**

(30) Priorität : 04.07.78 DE 7820028 U

(43) Veröffentlichungstag der Anmeldung :
23.01.80 (Patentblatt 80/02)

(45) Bekanntmachung des Hinweises auf die Patenterteilung : 21.10.81 Patentblatt 81/42

(84) Benannte Vertragsstaaten :
AT DE FR GB IT NL SE

(56) Entgegenhaltungen :
DE - A - 1 634 151
DE - A - 1 759 909
DE - A - 1 784 098
DE - A - 1 809 047
DE - U - 1 853 197
DE - U - 7 012 486
DE - U - 7 424 845
DE - U - 7 631 952
FR - A - 2 070 981
FR - A1 - 2 297 069
GB - A - 1 147 184
GB - A - 1 343 893
US - A - 3 103 789

(73) Patentinhaber : HOECHST AKTIENGESELLSCHAFT
Zentrale Patentabteilung Postfach 80 03 20
D-6230 Frankfurt/Main 80 (DE)

(72) Erfinder : Peters, Heinrich, Dr.
Robert-Koch-Strasse 201
D-8263 Burghausen/Salzach (DE)
Erfinder : Huber, Hans, Dr.
Lohnerstrasse 1
D-8261 Burgkirchen/Alz (DE)

Imprimerie Jouve, 17, rue du Louvre, 75001 Paris, France

Filterrohr

Die Erfindung betrifft ein Filterrohr aus Kunststoff für die Bodenbe- und Entwässerung, dessen Filterschicht aus mindestens einer offenporigen Folienbahn aus gesinterten Polymerteilchen besteht.

Die für die Bodenbe- und -entwässerung verwendeten Rohre bestehen im allgemeinen aus Ton oder Kunststoff. Die wasserab- oder -zuführende Funktion von solchen Rohren wird sehr oft dadurch beeinträchtigt, daß die im Rohrmantel angebrachten Öffnungen oder die Spalte an den Stoßkanten der Tonröhren durch Bodenteile verschlämmt oder die ganzen Rohre durch eingeschlämmten Boden verstopft werden und so die Bewässerung gestört wird oder zum Stillstand kommt. Auch sind einwachsende Pflanzenwurzeln häufig der Anlaß für eine erschwerte Wasserab- bzw. -zuteilung durch die Rohre.

Man ist deshalb schon lange dazu übergegangen, Be- bzw. Entwässerungsrohre mit einer Filterschicht zu umgeben, um den Verschlämmungsprozeß und das Einwachsen der Wurzeln hintanzuhalten. Aus dem deutschen Gebrauchsmuster 71 21 651 ist zum Beispiel bekannt, daß Dränrohre mit einer Filterschicht aus Kokosfasern und Stroh umgeben werden können.

In der DE-AS-20 28 664 werden in der Filterschicht von Dränrohren neben Kokosfasern verschäumte Kunststoffe, Zellwolle, Palmfasern, Häcksel und Torf verwendet.

Die Filterschicht solcher Dränrohre besteht oft aus mehreren Schichten verschiedener Filtermaterialien, sie sind deshalb umständlich herzustellen, aufgrund der verwendeten heterogenen Filtermaterialien in ihrer Filterwirkung ungleichmäßig und die Anfälligkeit vieler dieser Materialien gegenüber Verrottung führt zu einem raschen Verfall der Filterwirkung und damit zu einer Verstopfung der Dränage.

In dem deutschen Gebrauchsmuster 69 12 317 wird ein Dränagerohr aus Kunststoff beschrieben, das von einer Filterschicht aus Acrylfaser umhüllt ist. Da aber Acrylfaser bzw. eine Matte aus Acrylfasern keine ausreichende Festigkeit besitzt, müssen in diese Matte Verstärkungsfäden eingelegt werden. Diese Maßnahme ist sehr umständlich und, wenn die Verstärkungsfäden nur in Längsrichtung angeordnet sind, nur unzureichend. Darüberhinaus besitzen Acrylfasern den Nachteil, daß sie nicht schweißbar sind.

In dem deutschen Gebrauchsmuster 71 37 887 wird ein flexibles Dränrohr beschrieben, das als Gerüst eine endlose Kunststoffspirale aufweist, welche von einem Mantel aus Filterstoff umgeben ist. Der Filterstoff besteht aus gekräuselten, zu einem Wirrfaserflor gelegten Chemiefasern, die durch ein Netzgewebe hindurchgenadelt sind. Auch hier wurde ein aufwendiger Weg beschritten, dem Filtermaterial ausreichenden Zusammenhalt zu verleihen, indem man einen wenig Festigkeit aufweisenden Chemiefaserflor auf das Netzgewebe aufgenadelt hat. Außerdem ist dieses Dränrohr aufgrund seiner leichten Konstruktion dort, wo höhere Bodenbelastungen auftreten, kaum geeignet. Ein gewisse Verbesserung dieser Nachteile wird durch das in dem deutschen Gebrauchsmuster 74 24 845 beschriebene Dränrohr aus Kunststoff dadurch erreicht, daß es mit einer Filterschicht aus einem Spinnvlies aus Polyester, Polyamid oder Polyolefin umgeben wird. Jedoch ist auch dieses Rohr in der Herstellung relativ aufwendig, insbesondere wenn, wie in einer bevorzugten Ausführungsform beschrieben, die Filterschicht aus mehreren Spinnvlieslagen besteht. Wie bei vorangegangenen Konstruktionen, muß die Spinnvlieslage an den Stoßkanten oder Überlappungsstellen durch Schweissen, Kleben, Nähen oder Heften miteinander verbunden werden, um einen einigermaßen stabilen sitz des Vlieses auf dem Rohr zu gewährleisten. Dies ist wiederum recht umständlich und kann eine Verschiebung der Filterschicht-Ummantelung auf dem Rohr in Richtung der Rohrachse nicht verhindern.

Die Aufgabe der vorliegenden Erfindung besteht darin, die Nachteile der bisher bekannten Filterrohre zu beseitigen und ein Be- bzw. Entwässerungsrohr mit Filterschicht zur Verfügung zu stellen, welches einfach in der Herstellung und mechanisch stabil ist sowie eine dauerhaft-funktionsgerechte Filterschicht besitzt.

Diese Aufgabe wird gelöst durch ein kontinuierlich endlos herstellbares Filterrohr aus Kunststoff für die Bodenbe- oder -entwässerung, dessen Mantel Öffnungen aufweist und mit einer Filterschicht umgeben ist mit dem Kennzeichen, daß die Filterschicht mindestens eine offenporige Folienbahn ist, die ausschließlich aus gesinterten Polymerteilchen besteht.

Das Rohr muß so stabil konstruiert sein, daß es die hohen Druckbelastungen des darüber befindlichen Erdreichs aushält. Das Material der Rohre ist bevorzugt Polyvinylchlorid, nachchloriertes Polyvinylchlorid, Polypropylen, Polyethylen oder nachchloriertes Polyethylen. Es kommen aber auch andere extrudierbare thermoplastische Polymere in Betracht, das Rohr kann auch aus Metall, Glas oder Keramik bestehen, doch ist auf diesen Rohrmaterialien die Befestigung der offenporigen Folienbahn umständlicher. Das Rohr wird im allgemeinen einen inneren (lichten) Durchmesser von 35 bis 200 mm haben. Die Öffnungen im Mantel sind im allgemeinen kreis- oder schlitzförmig über die gesamte Mantelfläche gleichmäßig verteilt angebracht, sie können aber auch eine beliebige andere Form und Verteilung aufweisen, das Rohr kann längsgerippt oder senkrecht zur Längsachse gewellt sein. Letzteres ist vorteilhaft bei Rohren aus extrudierbaren thermoplastischen Polymeren, um solche Rohre flexibler zu machen. Bei den senkrecht zur Längsachse gewellten Rohren befinden sich die Öffnungen im Mantel vorzugsweise in den Wellentälern.

Die Filterschicht des erfindungsgemäßen Rohres besteht aus mindestens einer offenporigen Folienbahn aus gesinterten Polymerteilchen. Diese Folienbahn soll eine Dicke von etwa 0,5 bis etwa 5 mm, vorzugsweise von 1 bis 3 mm aufweisen.

Um einerseits einen guten Transport des Wassers zu gewährleisten und andererseits die notwendige mechanische Festigkeit beizubehalten, soll die Folienbahn ein Gesamt-Porenvolumen (beispielsweise bestimmt durch Dichtemessung) von 30 bis 80 %, vorzugsweise von 40 bis 60 %, auweisen. Von diesen Gesamt-Poren sollen 60 bis 100 %, vorzugsweise 80 bis 100 % offen sein. Die Bestimmung des offenen Porenvolumens ist beispielsweise durch die Quecksilber-Hochdruck-Porosymmetrie möglich (siehe Plaste und Kautschuk 22, (1975) Seite 7).

Die Folienbahn soll ferner eine kapillare Steighöhe von etwa 60 bis etwa 200 mm, vorzugsweise von 80 bis 160 mm, aufweisen. Die kapillare Steighöhe wird wie folgt bestimmt:

Ein 1 cm breiter Folienstreifen wird so in eine mit destilliertem Wasser von 20 °C teilweise gefüllte Proberöhre gestellt, daß der 1,5 cm tief in das Wasser eintaucht. Hierbei steigt das Wasser in der Folie durch Kapillarkräfte nach oben. Nach 10 Minuten wird bestimmt, um wieviel Millimeter das Wasser in der porösen Folie gestiegen ist. Die Wassermenge in der Proberöhre ist so bemessen, daß die durch die Folie aufgesaugte Wassermenge nur eine praktisch zu vernachlässigende Niveausenkung des Wasserspiegels bewirkt.

Die gemessene kapillare Steighöhe in Millimetern ist ein Maß für die Benetzbarkeit und Wassertransportfähigkeit der Folie.

Die Folienbahn soll weiterhin eine Reißdehnung von mindestens 5 %, vorzugsweise von 8 bis 15 % (gemessen nach DIN 53 455), besitzen, um eine störungsfreie Verwendbarkeit im Sinne der Erfindung zu gewährleisten.

Es können auch mehrere poröse Folienbahnen unterschiedlichen oder gleichen Porenvolumens übereinandergelegt im Sinne der Erfindung verwendet werden. In diesem Fall kann die Einzel-Foliendicke den Wert von 0,5 mm bis auf etwa 0,2 mm unterschreiten.

Besonders vorteilhaft ist es, sowohl das mit Öffnungen im Mantel versehene eingentliche Rohr wie auch die es umgebende Filterschicht aus chemisch den gleichen oder sehr ähnlichen Polymeren herzustellen. Unter «chemisch sehr ähnlichen Polymeren» sind solche Polymere zu verstehen, die durch chemische Umsetzungen, beispielsweise Chlorierung, Verseifung oder Veresterung oder durch Copolymerisation mit geeigneten Monomeren, bzw. Pfropfcopolymerisation mit geeigneten Polymeren nur schwach modifiziert sind, das heißt nicht mehr als etwa 10 Gew.-%, bezogen auf die Gesamtmenge des Polymeren, an modifizierten Polymerkettenbestandteilen enthalten.

Insbesondere ist es vorteilhaft, wenn sowohl das Rohr an sich wie auch die Filterschicht aus Polymeren bestehen, die mindestens 90 Gew.-% (bezogen auf das Polymere) polymerisierte Vinylchlorid-Einheiten enthalten.

Ferner ist es vorteilhaft, wenn sowohl das Rohr an sich wie auch die Filterschicht aus einem der folgenden Polymeren bestehen : Polyethylen, Polypropylen, chloriertes Polyethylen, chloriertes Polyvinylchlorid.

Die offenporige Folienbahn kann beispielsweise nach den in folgenden Schriften beschriebenen Verfahren hergestellt werden : DE-B-11 18 962, DE-A-19 41 825, US-A-3 544 338.

Geeignete Polymere, bzw. Polymermischungen, sind beispielsweise beschrieben in folgenden Schriften : DE-A 21 27 654, 23 03 750, 23 10 431 und 24 15 076.

Die Polymeren können gegebenenfalls Stabilisatoren gegen die Einwirkung von Wärme und/oder Licht sowie andere verarbeitungsverbessernde Zusätze enthalten. In bestimmten Grenzen können auch feinpulverisierte anorganische oder organische Stoffe, beispielsweise Talkum, Kreide, Aluminiumoxidpulver, Aluminiumpulver, Siliciumdioxidpulver, Gesteinspulver, Glaspulver sowie auch Titandioxidpulver und organische Farbpigmente zugesetzt werden, doch sind solche Zusätze im allgemeinen nicht erforderlich.

Um das mit Öffnungen im Mantel versehene Rohr mit der offenporigen Folienbahn zu umgeben, wird ersteres beispielsweise mit dieser Bahn schraubenförmig umwickelt, wie beispielsweise aus F. Kainer «Polyvinylchlorid und Vinylchlorid-Mischpolymerisate» 1951, Springer Verlag/Berlin, Seiten 540 bis 541, ersichtlich. Hierfür sind beispielsweise Bandwickelmaschinen geeignet, wie sie in der Elektrokabelindustrie zum Umwickeln von Leitersträngen verwendet werden.

Das Rohr kann auch in die Folienbahn so eingeschlagen werden, daß in letzterer eine parallel zur Rohrachse verlaufende Nahtstelle entsteht, wie beispielsweise beschrieben in DE-C-12 54 092 und DE-A-26 38 915.

An den Berührungsstellen zweier gegenüberliegender Folienbahnteile (Nahtstellen) können die beiden Folienbahnteile entweder weitgehend dichtschließend stumpf aneinanderstoßend oder einander überlappend angeordnet sein.

Die Befestigung der Folienbahn auf dem Rohr kann in bekannter Weise durch Verkleben oder Umwickeln mit einem Faden oder einem Netzwerk geschehen. Wenn Rohr und offenporige Folienbahn aus den gleichen oder chemisch sehr ähnlichen Polymeren bestehen, kann vorteilhaft die Befestigung durch punktförmiges Verschweißen erfolgen.

Das erfindungsgemäße Filterrohr kann auch für andere Zwecke, beispielsweise für die Zu- bzw. Abführung von anderen Flüssigkeiten als Wasser oder Gasen, Verwendung finden, wobei die verwendeten Rohr- bzw. Filterschichtmaterialien bezüglich ihrer chemischen bzw. physikalischen Beständigkeit auf den Verwendungszweck abgestimmt werden müssen.

Das erfindungsgemäße Filterrohr vermeidet, wie eingangs bereits angedeutet, das Verschlämmen bzw. Versanden des Rohres sowie auch das störende Einwachsen von Pflanzenwurzeln, es ist sowohl gegen Verrottung als auch gegen- über vielen anderen chemischen Einflüssen beständig und kann wie übliche Rohre für Be- bzw. Entwässerungszwecke verlegt werden.

In nachfolgenden Figuren wird die Erfindung beispielhaft erläutert, sie ist nicht auf die in den Figuren gezeigten Anordnungen beschränkt :

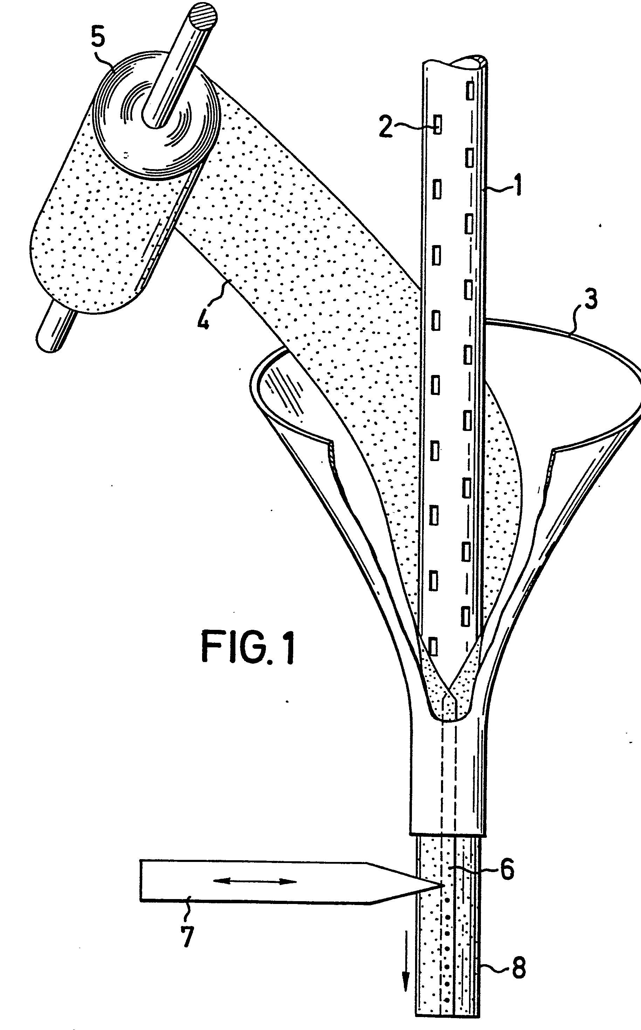

Fig. 1 : Ein Rohr (1), dessen Manten Öffnungen (2) aufweist und das aus einem thermoplastischen Polymeren besteht, läuft senkrecht von oben nach unten in eine trichterförmige Vorrichtung (3 ; teilweise aufgeschnitten gezeichnet) ein.

In die gleiche Vorrichtung wird von oben her eine offenporige Folienbahn (4), die von einer Rolle (5) abläuft, eingeführt. Die trichterförmige Vorrichtung (3) bewirkt, daß die offenporige Folienbahn (4) das Rohr (1) vollständig umschließt, wobei eine parallel zur Achse des Rohres verlaufende Überlappungsnaht (6) entsteht. Nach Verlassen der trichterförmigen Vorrichtung (3) wird die umhüllende Folienbahn mit dem Rohr vermittels einer hin- und hergeführten Wärmeimpuls-Schweißvorrichtung (7) an der überlappenden Naht (6) punktförmig verschweißt. Das auf diese Art hergestellte erfindungsgemäße Rohr (8) wird nach unten (siehe Pfeil) abgeführt.

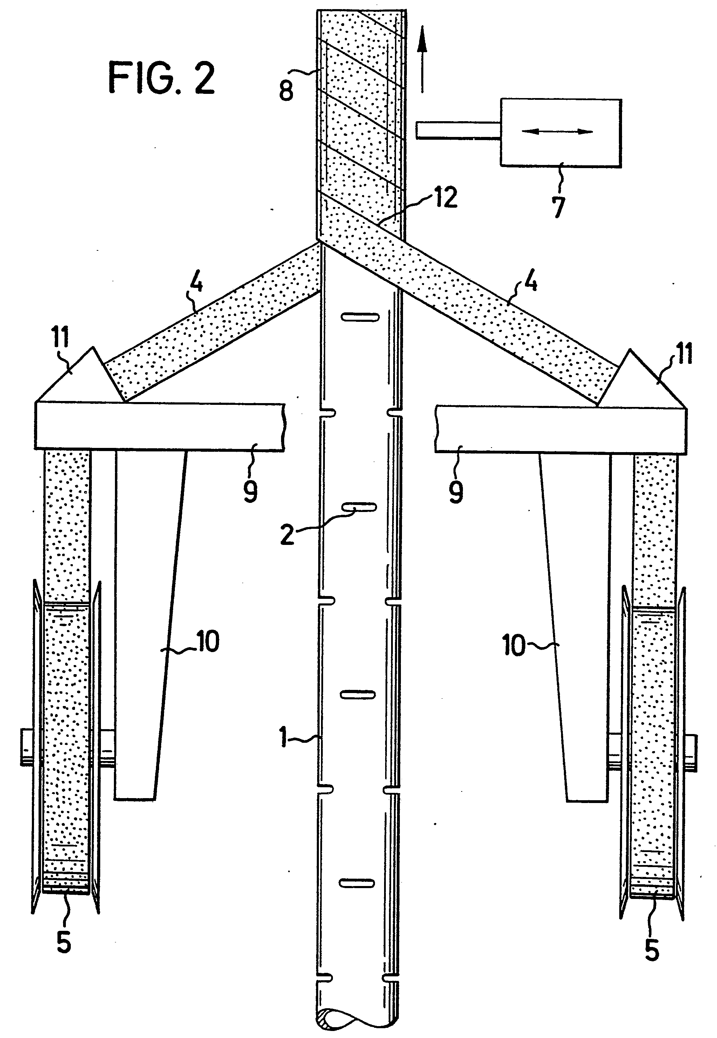

Fig. 2 : Ein Rohr (1), dessen Mantel Öffnungen (2) aufweist, wird senkrecht von unten nach oben durch eine Umwickel-Vorrichtung (9) geführt, die konzentrisch um das Rohr (1) rotiert. An der Umwickel-Vorrichtung (9) sind zwei Rollenhalter (10) angebracht, auf denen je eine Folienrolle (5) drehbar gelagert ist. Von dieser Folienrolle läuft eine offenporige Folienbahn (4) ab, wird durch eine Umlenkvorrichtung (11) schräg auf das Rohr (1) zugelenkt und umgibt dieses wendelförmig. Die Transportgeschwindigkeit des Rohres (1) und die Rotationsgeschwindigkeit der Umwickel-Vorrichtung (9) sind so aufeinander abgestimmt, daß die Stoßkanten (12) der beiden das Rohr (1) wendelförmig umgebenden offenporigen Folienbahnen (4) dicht aneinanderschließen. Nach der Umwicklung werden Rohr (1) und umgebende Folienbahn (4), die beide aus dem gleichen thermoplastischen Polymeren bestehen, mit einer hin- und herlaufenden Wärmeimpuls-Schweißvorrichtung (7) punktförmig miteinander verschweißt. Das so erzeugte erfindungsgemäße Rohr (8) wird nach oben (siehe Pfeilrichtung) abgeführt.

### Ansprüche

1. Kontinuierlich endlos herstellbares Filter rohr (1 ; 8) aus Kunststoff für die Bodenbe- und -entwässerung, dessen Mantel Öffnungen (2) aufweist und mit einer Filterschicht umgeben ist, dadurch gekennzeichnet, daß die Filterschicht mindestens eine offenporige Folienbahn (4) ist, die ausschließlich aus gesinterten Polymerteilchen besteht.

2. Filterrohr (1 ; 8) nach Anspruch 1, dadurch gekennzeichnet, daß sowohl das Rohr (1) an sich wie auch die Filterschicht aus denselben oder auch chemisch weitgehend ähnlichen thermoplastischen Polymeren bestehen.

3. Filterrohr (1 ; 8) nach Anspruch 2, dadurch gekennzeichnet daß das Rohr (1) an sich und die Filterschicht aus Polymeren bestehen, die mindestens 90 Gew.-% (bezogen auf das Polymere) polymerisierte Vinylchlorid-Einheiten enthalten.

4. Filterrohr (1 ; 8) nach Anspruch 2, dadurch gekennzeichnet, daß das Rohr (1) an sich und die Filterschicht aus einem der folgenden Polymeren bestehen : Polyethylen ; Polypropylen ; chloriertes Polyethylen ; chloriertes Polyvinylchlorid.

5. Filterrohr (1 ; 8) nach Ansprüchen 1 bis 4, dadurch gekennzeichnet, daß die offenporige Folienbahn (4) ein Porenvolumen von 30 bis 80 % und eine Dicke von 0,5 bis 5 mm aufweist.

6. Filterrohr (1 ; 8) nach Ansprüchen 1 bis 5, dadurch gekennzeichnet, daß die offenporige Folienbahn (4) eine kapillare Steighöhe von 60 bis 200 mm (gemessen mit Wasser von 20 °C nach 10 Minuten) aufweist.

7. Filterrohr (1 ; 8) nach Ansprüchen 1 bis 6, dadurch gekennzeichnet, daß das Rohr (1) an sich und die Filterschicht durch mehrfache punktförmige Verschweißung miteinander verbunden sind.

### Claims

1. Continuously endless producible filter pipe made from plastic material for irrigation or drainage having a perforated mantle and being wrapped in a filter layer, characterised in that the filter layer is at least one film or sheeting having open pores and consisting exclusively of sintered polymer particles.

2. Filter pipe as claimed in claim 1, characterised in that the pipe in itself and the filter layer both consist of either the same or chemically extensively similar thermoplastic polymers.

3. Filter pipe as claimed in claim 2, characterised is that the pipe in itself and the filter layer both consist of polymers which contain at least 90 % by weight, relative to the polymer, polymerised vinyl chloride units.

4. Filter pipe as claimed in claim 2, characterised in that the pipe in itself and the filter layer both consist of one of the following polymers : polyethylene ; polypropylene ; chlorinated polyethylene ; chlorinated polyvinyl chloride.

5. Filter pipe as claimed in any of claims 1 to 4, characterised in that the porous film or sheeting have a thickness of 0,5 to 5 mm and a total volume of the pores of 30 to 80 %.

6. Filter pipe as claimed in any of claims 1 to 5, characterised in that the porous film or sheeting have a capillary rise of 60 to 200 mm (determined with water at 20 °C after 10 min).

7. Filter pipe as claimed in any of claims 1 to 6, characterised in that the pipe in itself is connected with the filter layer by a multiplicity of welded spots.

### Revendications

1. Tuyau filtrant (1 ; 8) en matière plastique pour l'irrigation et le drainage des sols, pouvant être fabriqué en continu, dont la paroi présente des ouvertures (2) et qui est entouré d'une couche filtrante, tuyau caractérisé en ce que la couche filtrante se compose d'au moins une bande de feuille à pores ouverts (4), exclusivement constituée de particules de polymère frittées.

2. Tuyau filtrant (1 ; 8) suivant la revendication 1, caractérisé en ce que le tuyau (1) lui-même et la couche filtrante sont constitués d'un même polymère thermoplastique ou de polymères thermoplastiques très analogues chimiquement.

3. Tuyau filtrant (1 ; 8) suivant la revendication 2, caractérisé en ce que le tuyau (1) lui-même et la couche filtrante sont constitués de polymères contenant au moins 90 % en poids (par rapport au polymère) de motifs de chlorure de vinyle polymérisés.

4. Tuyau filtrant (1 ; 8) suivant la revendication 2, caractérisé en ce que le tuyau (1) lui-même et la couche filtrante sont constitués de l'un de polymères suivants : polyéthylène, polypropylène, polyéthylène chloré, polychlorure de vinyle surchloré.

5. Tuyau filtrant (1 ; 8) suivant l'une quelconque des revendications 1 à 4, caractérisé en ce que la bande de feuille à pores ouverts (4) présente un volume de pores de 30 à 80 % et une épaisseur de 0,5 à 5 mm.

6. Tuyau filtrant (1 ; 8) suivant l'une quelconque des revendications 1 à 5, caractérisé en ce que la bande de feuille à pores ouverts (4) présente une ascension capillaire (mesurée avec de l'eau à 20 °C au bout de 10 minutes) de 60 à 200 mm.

7. Tuyau filtrant (1 ; 8) suivant l'une quelconque des revendications 1 à 6, caractérisé en ce que le tuyau (1) lui-même et la couche filtrante sont liés entre eux par soudage par points.

FIG. 1

FIG. 2